# EUROPÄISCHE PATENTANMELDUNG

(11) **EP 4 606 553 A2**
(43) Veröffentlichungstag der Anmeldung: **27.08.2025**
(21) Anmeldenummer: 25181861.3
(22) Anmeldetag: 15.05.2019
(51) Int. Cl.: B29C 48/31

(54) **VERFAHREN ZUR AUTOMATISIERTEN REGELUNG DER GRÖSSE EINES SPALTES EINER DÜSENANORDNUNG UND STEUER- UND/ODER REGELSYSTEM**

(30) Priorität: 16.05.2018 DE 102018111766
(62) Teilanmeldung aus: 19725089.7
(71) Anmelder: Windmöller & Hölscher KG, 49525 Lengerich (DE)
(72) Erfinder: SCHMITZ, Dr. Torsten, 49525 Lengerich (DE); Faustmann, Daniel, 49525 Lengerich (DE); GROEPPER, Bernd-Alexander, 49525 Lengerich (DE); Colell, Waldemar, 49525 Lengerich (DE)
(74) Vertreter: Bals & Vogel Patentanwälte PartGmbB

(57) **Zusammenfassung**

Die Erfindung betrifft ein Verfahren zur automatisierten Regelung der Größe eines Spaltes einer Düsenanordnung, wobei die Düsenanordnung eine erste und eine zweite Düsenlippe sowie einen zwischen den Düsenlippen angeordneten Düsenaustrittsspalt zur kontrollierten Einstellung eines Dickenprofils einer förderbaren Schmelze aufweist. An der ersten Düsenlippe ist eine Mehrzahl von Stellelementen, insbesondere eine Mehrzahl von Stellbolzen, angeordnet, welche mit einem zugehörigen Thermoelement gekoppelt sind, wobei die Thermoelemente von der Regelung derart ansteuerbar sind, dass durch eine Ausdehnung oder Kontraktion der Thermoelemente die Spaltverstellung mittels einer mechanischen Krafteinwirkung von dem jeweiligen Stellelement auf die erste Düsenlippe realisierbar ist. Jeweils in einem rechtsseitigen und linksseitigen Randbereich der Düsenanordnung ist wenigstens ein Klemmschwert angeordnet, wodurch die Breite des Düsenaustrittsspaltes variabel einstellbar ist. Das Verfahren umfasst folgende Schritte, welche zur Breitenverstellung des Düsenaustrittsspaltes und zur Verklemmung der Stellelemente automatisch durchgeführt werden:
- Entklemmen des Klemmschwertes innerhalb des Düsenaustrittsspaltes;
- Verschieben des Klemmschwertes innerhalb des Düsenaustrittspaltes;
- Verklemmen des Klemmschwertes innerhalb des Düsenaustrittsspaltes zur Fixierung einzelner Stellelemente.

Ferner betrifft die Erfindung ein Steuer- und/oder Regelsystem.

## Beschreibung

Die vorliegende Erfindung betrifft ein Verfahren zur automatisierten Regelung der Größe eines Spaltes einer Düsenanordnung. Die Erfindung betrifft weiterhin ein Steuer- und/oder Regelsystem.

In Flachfolienanwendungen, wie beispielsweise bei der Herstellung von Folien, oder Bändern aus thermoplastischen Kunststoffen, werden nach dem Stand der Technik Automatikdüsen verwendet, um eine extrudierte Kunststoffschmelze zu einer dünnen rechteckigen Fläche bzw. Folie auszuformen. Die Automatikdüsen weisen eine erste und eine zweite Düsenlippe sowie einen zwischen den Düsenlippen angeordneten Düsenaustrittsspalt zur kontrollierten Einstellung eines Dickenprofils der förderbaren Schmelze auf. An der ersten Düsenlippe ist eine Mehrzahl von Stellelementen angeordnet, welche jeweils mit einem Thermoelement gekoppelt sind. Die Thermoelemente dehnen sich bei Erwärmung aus und üben dabei über das zugehörige Stellelement einen mechanischen Druck auf die Düsenlippe aus, wodurch diese sich an der entsprechenden Stelle verformt. Insbesondere verkleinert sich dadurch der Düsenaustrittsspalt. Weiterhin können sich die Thermoelemente bei einer Abkühlung komprimieren und bewirken über die Stellelemente einen mechanischen Zug an der Düsenlippe, wodurch sich der Düsenaustrittsspalt an der entsprechenden Stelle vergrößert. Die Thermoelemente sind hierzu von einer Düsenregelung derart ansteuerbar, dass durch eine Ausdehnung oder Kontraktion der Thermoelemente die Spaltverstellung mittels einer mechanischen Krafteinwirkung von dem jeweiligen Stellelement auf die erste Düsenlippe realisierbar ist.

Hierbei ist es wichtig, dass mittels der Einstellung bzw. Verstellung des Düsenaustrittspalts das kontrollierte Dickenprofil der Schmelze erzielt werden kann. Das Dickenprofil ist insbesondere für nachfolgende Prozesse wie beispielsweise das Aufwickeln von Folienbahnen zur Lagerung oder der Weiterverarbeitung der Folie zu Säcken entscheidend. Zur Überwachung des Dickenprofils werden bekanntermaßen Dickenmessgeräte, insbesondere mittels Ultraschall- oder Infrarotmessungen, so eingesetzt, dass Querprofilabweichungen in einem Nettobereich der Folie bzw. Schmelze kontinuierlich minimiert werden, um so genannte Kolbenringe an der Folienrolle zu vermeiden. Mit anderen Worten werden kontinuierlich Abweichungen von einem Sollprofil der Folie mittels der Dickenmessung ermittelt und daraus ein Stellwert für die einzelnen Thermoelemente bzw. Stellelemente an der Düsenlippe von der Regelung generiert, sodass der Düsenaustrittsspalt für eine gleichmäßige Dicke lokal vergrößert bzw. verkleinert wird. Als messbares und angezeigtes Qualitätskriterium einer mittels einer Düsenregelung hergestellten Flachfolie wird in der Regel eine statistische 2- oder 3-Sigma Abweichung der gemessenen Foliendicke von einem Mittelwert bzw. einem Sollwert angegeben.

Voraussetzung für die Funktion von Düsenregelungen ist eine präzise, manuelle Einstellung eines homogenen, auf das herzustellende Produkt angepassten Düsenaustrittsspalts. Folglich muss vor Inbetriebnahme und gegebenenfalls während der Düsenregelung zusätzlich eine vom Bediener vorgenommene Einstellung einzelner Stellelemente der Düsenanordnung so vorgenommen werden, dass ein stabiler Prozess erreicht wird.

Der Vorgang der Einstellung des Düsenaustrittsspaltes wird häufig manuell während einer Unterbrechung der Produktion durchgeführt, indem einzelne Stellelemente manuell vom Bediener geschlossen bzw. geöffnet werden. Diese Verstellung einzelner Stellelemente kann sehr zeitaufwendig sein.

Bedingt durch die gegenseitige, insbesondere asymmetrische Beeinflussung der Stellelemente in Bezug auf die Biegekurve der Düsenlippe (Querbeeinflussung) kann sich auch nach einer manuellen Zentrierung des Düsenaustrittsspaltes eine nachteilige Profiltoleranz mit einer 2-Sigma Abweichung des Dickenprofils von mehr als 20-40% ergeben. Die manuelle Zentrierung des Düsenaustrittsspaltes ist dabei maßgeblich abhängig von der professionellen Erfahrung des Bedieners. Weiterhin gestaltet sich die manuelle Zentrierung als zeitaufwendig und teilweise nicht vollständig reproduzierbar und die einzelnen Stellelemente müssen bei jeder weiteren Inbetriebnahme bzw. bei jeder weiteren Abweichung vom Sollwert des Dickenprofils während der Produktion wiederholt nacheinander folgend eingestellt bzw. verstellt werden.

Ferner sind für eine weitere Einstellung des Düsenaustrittsspaltes jeweils in einem rechtsseitigen und linksseitigen Randbereich der Düsenanordnung ein Klemmschwert angeordnet, wodurch die Breite des Düsenaustrittsspaltes variabel einstellbar ist. Die Verstellung der Klemmschwerter erfolgt bekanntermaßen manuell durch den Bediener der Düsenanordnung. Beispielsweise muss bei einer Breitenverstellung des Düsenaustrittsspaltes von 3m auf 2m der Bediener das rechtsseitige und linksseitige Klemmschwert manuell betätigen bzw. verschieben, um die Spaltbreite zu verkleinern. Dies muss bei jeder Formatverstellung der Düsenanordnung je nach Produkt erneut manuell erfolgen. Weiterhin müssen aufgrund der Verstellung der Klemmschwerter auch die einzelnen Stellelemente manuell auf die neue Spaltbreite eingestellt werden. Eine produktabhängige Optimierung erfolgt aus Zeit- und/oder Kompetenzgründen meist nicht.

Es ist daher eine Aufgabe der vorliegenden Erfindung, die voranstehend beschriebenen Nachteile zumindest teilweise zu beheben. Insbesondere ist es eine Aufgabe der vorliegenden Erfindung, eine Einstellung des Düsenaustrittsspaltes mit einer verbesserten Präzision und/oder einem verminderten Zeitaufwand bereitzustellen.

Voranstehende Aufgabe wird gelöst durch ein Verfahren mit den Merkmalen des Anspruchs 1. Ferner wird die Aufgabe gelöst durch ein Steuer- und/oder Regelsystem mit den Merkmalen des Anspruchs 15. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Steuer- und/oder Regelsystem und jeweils umgekehrt, so dass bezüglich der Offenbarung zu den einzelnen Erfindungsaspekten stets wechselseitig Bezug genommen wird bzw. werden kann.

Im Rahmen der Anmeldung umfasst der Begriff der Regelung vorzugsweise Steuer- und/oder Regelverfahren und/oder Maschinenlernverfahren, welchen als Eingangssignal in die Regelung eine Messgröße hinsichtlich des Dickenprofils und/oder der charakteristischen Eigenschaften der Schmelze zugeführt werden kann und basierend darauf eine Einstellung bzw. Verstellung einzelner oder aller Stellelemente bzw. Thermoelemente ausgeführt werden kann. Die Verstellung erfolgt hierbei mittels eines von der Regelung generierten Stellwertes bzw. Stellsignals für die einzelnen Stellelemente bzw. den zugehörigen Thermoelementen.

Weiterhin umfasst im Rahmen der Anmeldung der Begriff des "Pinning" insbesondere die Anhaftung bzw. Fixierung der Schmelze an eine Gießwalze. Die Anhaftung kann dabei vorzugsweise elektrostatisch oder pneumatisch erfolgen.

Als Stellelemente werden im Rahmen der Anmeldung beispielhaft Elemente zur lokalen Verstellung des Düsenaustrittsspaltes bezeichnet, wie beispielsweise Thermodehnbolzen, Schritt-/Servomotoren oder Piezo-Aktoren. Weiterhin sind generell piezomechanische oder durch elektrochemische Volumenänderungen betriebene Stellelemente denkbar.

Gemäß einem ersten Aspekt der Erfindung wird die Aufgabe gelöst durch ein Verfahren zur automatisierten Regelung der Größe eines Spaltes einer Düsenanordnung, wobei die Düsenanordnung eine erste und eine zweite Düsenlippe sowie einen zwischen den Düsenlippen angeordneten Düsenaustrittsspalt zur kontrollierten Einstellung eines Dickenprofils einer förderbaren Schmelze aufweist. An der ersten Düsenlippe ist eine Mehrzahl von Stellelementen, insbesondere eine Mehrzahl von Stellbolzen, angeordnet, welche mit einem zugehörigen Thermoelement gekoppelt sind, wobei die Thermoelemente von der Regelung derart ansteuerbar sind, dass durch eine Ausdehnung oder Kontraktion der Thermoelemente die Spaltverstellung mittels einer mechanischen Krafteinwirkung von dem jeweiligen Stellelement auf die erste Düsenlippe realisierbar ist. Jeweils in einem rechtsseitigen und linksseitigen Randbereich der Düsenanordnung ist wenigstens ein Klemmschwert angeordnet, wodurch die Breite des Düsenaustrittsspaltes variabel einstellbar ist. Das Verfahren umfasst folgende Schritte, welche zur Breitenverstellung des Düsenaustrittsspaltes und zur Verklemmung der Stellelemente automatisch durchgeführt werden:
- Entklemmen des Klemmschwertes innerhalb des Düsenaustrittsspaltes;
- Verschieben des Klemmschwertes innerhalb des Düsenaustrittspaltes;
- Verklemmen des Klemmschwertes innerhalb des Düsenaustrittsspaltes zur Fixierung einzelner Stellelemente.

Die Reihenfolge der einzelnen Verfahrensschritte des erfindungsgemäßen Verfahrens kann in der beschriebenen Reihenfolge erfolgen. Weiterhin ist jedoch auch eine andere, als die jeweils beschriebene Reihenfolge der Verfahrensschritte denkbar. Insbesondere können auch einzelne Verfahrensschritte oder alle Verfahrensschritte wiederholt und/oder parallel ausgeführt werden.

Die Erfindung hat den Vorteil, dass sich durch die automatische Einstellung der Klemmschwerter für eine Breitenverstellung des Düsenaustrittspaltes eine signifikante Zeitersparnis im Produktionsprozess erzielen lässt, da kein manuelles Verstellen durch den Bediener erforderlich ist. Darüber hinaus ermöglicht die Düsenregelung die Basis für einen weiteren Kundennutzen, und zwar die vollautomatische Breitenverstellung bei einer Flachfolienanlage. Daher kann ein sehr flexibles Format der Flachfolie realisiert werden. Durch den Prozess der Automatisierung der Verstellung der Klemmschwerter können größere Absatzmengen erzielt und der Bediener der Düsenanordnung in physischer und psychischer Hinsicht entlastet werden. Weiterhin kann durch die Automatisierung die Präzision der Verstellung der Klemmschwerter erhöht werden.

Vorzugsweise kann vorgesehen sein, dass das Entklemmen und/oder Verklemmen des Klemmschwertes thermisch erfolgt. Insbesondere kann das Entklemmen und/oder Verklemmen des Klemmschwertes mittels eines entsprechenden Thermoelementes erfolgen, welches mit dem Klemmschwert gekoppelt ist. Die Thermoelemente dehnen sich bei Erwärmung aus und üben dabei auf das zugehörige Klemmschwert einen mechanischen Druck aus. Beispielhaft können die Thermoelemente derart von der Regelung angesteuert werden, dass durch eine Ausdehnung oder Kontraktion der Thermoelemente das Entklemmen und/oder Verklemmen des Klemmschwertes realisiert wird. Mittels dem thermischen Entklemmen und/oder Verklemmen kann eine gut steuerbare Feinjustierung erfolgen. Dies ermöglicht eine exakte Positionierung und Lage- und/oder Anpressdruckjustierung der Klemmschwerter und gewährleistet daher eine qualitative verbesserte und gleichzeitig automatisiert durchzuführende Einstellung der Klemmschwerter.

In einer bevorzugten Ausführungsform kann vorgesehen sein, dass bei dem Verschieben des Klemmschwertes zur Verkleinerung des Düsenaustrittspaltes eine spezifische, insbesondere vorgespeicherte, Einstellung der Stellelemente, insbesondere in einem Randbereich, auf den verkleinerten Düsenaustrittsspalt entsprechend übertragen wird. Dies hat den Vorteil, dass bei einer erneuten Folienproduktion eine gezielte Inbetriebnahme mit vorgespeicherten Einstellungen ermöglicht wird, wodurch die Reproduzierbarkeit der Einstellung des Düsenaustrittsspaltes weiter erhöht wird. Insbesondere kann die Einstellung der Stellelemente als Rezepturwert eingespeichert werden und/oder in Bezug auf spezifische vordefinierte Kriterien automatisch geregelt werden. Durch die Übertragung der Einstellung der Stellelemente bei einer Formatverstellung der Breite des Düsenaustrittsspalts kann eine optimale Anpassung an die neue Breite erzielt werden. Zusätzlich ergibt sich durch die Übertragung der Einstellungen, skaliert auf die Breite des Düsenaustrittsspaltes, eine weitere Zeitersparnis in der Produktion.

Im Rahmen der Erfindung ist ferner denkbar, dass vor einem Verschieben des Klemmschwertes eine Prüfung der Notwendigkeit einer Anpassung der spezifischen, insbesondere vorgespeicherten, Einstellung der Stellelemente, insbesondere in einem Randbereich, erfolgt. Die Prüfung kann insbesondere abhängig von der Schmelze bzw. dem Material des zu produzierenden Produktes erfolgen. Dabei kann insbesondere das Material der Schmelze, die Betriebstemperatur bzw. Schmelzetemperatur oder die Rezeptur der Schmelze, insbesondere deren Viskosität und/oder Viskoelastizität miteinbezogen werden. Die Prüfung kann weiterhin vorzugsweise im Hinblick auf Qualitäts- und/oder Stabilitätskriterien der Schmelze und/oder des Prozesses, wie beispielsweise der Liniengeschwindigkeit und/oder der Länge der Schmelzefahne eingestellt werden. Vorteilhafterweise können spezifische Randeinstellungen auf den neuen Randabschnitt nach innen übertragen werden und eine automatische Formatverstellung des Düsenaustrittsspaltes erfolgen.

Alternativ oder zusätzlich ist es denkbar, dass bei dem Verschieben des Klemmschwertes zur Verkleinerung des Düsenaustrittspaltes eine spezifische, insbesondere vorgespeicherte, Einstellung einer Randanhaftung der aus der Düsenanordnung austretenden Schmelze an einer Gießwalze mittels Elektrostatik und/oder Luft auf den verkleinerten Düsenaustrittsspalt entsprechend übertragen wird. Die Randanhaftung beschreibt eine Anheftung der aus dem Düsenaustrittsspalt austretenden Schmelze an der Gießwalze, beispielsweise über Elektrostatik ("elektrostatisches Pinning") und/oder über Luft ("Luft-Pinning"). Insbesondere durch das elektrostatische Pinning zwischen einer Randverdickung und dem Nettobereich der Folie kann eine Dünnstelle auftreten, da die Elektrostatik von beiden Seiten her Schmelzepartikel anzieht. Die Ausprägung der Dünnstelle ist beispielsweise abhängig von der Schmelzestromverteilung am Düsenaustrittsspalt, vom viskoelastischen Verhalten der Schmelze und von Prozesseinstellungen wie beispielsweise der Liniengeschwindigkeit, der Länge der Schmelzefahne, der Stärke des Pinning sowie anderen Anlegeeinrichtungen wie Vakuumbox oder Luftmesser. Durch die Einstellung der Randanhaftung bzw. des Pinning kann die Reproduzierbarkeit der Schmelzestromverteilung bei Düsenaustritt, insbesondere in den Randbereichen der Düse und/oder das Herstellen einer Symmetrie desselben erzielt werden. Durch die Übertragung der Einstellung für die Randanhaftung bei einer Formatverstellung der Breite des Düsenaustrittsspalts kann weiterhin eine optimale Anpassung an die neue Breite zusätzlich verbessert werden.

Vorzugsweise kann vorgesehen sein, dass bei dem Verschieben und Verklemmen des Klemmschwertes zur Verkleinerung des Düsenaustrittspaltes die fixierten Stellelemente von der Regelung ausgenommen werden. In einer bevorzugten Ausführungsform kann vorgesehen sein, dass die fixierten Stellelemente von der Regelung auf einen exakten Sollwert eingestellt werden. Dies hat den Vorteil, dass der Sollwert bei den von dem Klemmschwert fixierten Stellelementen auf einen definierten Wert gesetzt werden kann, insbesondere ein maximaler oder minimaler Öffnungshub, sodass die fixierten Stellelemente ihre Position nicht verändern. Dies hat den Vorteil der Dichtigkeit, da die fixierten Stellelemente vorzugsweise keine Schmelze durch den Düsenaustrittspalt durchlassen. Somit kann sichergestellt werden, dass keine Schmelze außerhalb des vorgesehenen Randbereichs des Düsenaustrittsspaltes austritt.

Alternativ oder zusätzlich ist es denkbar, dass die Regelung der Stellelemente automatisch basierend auf Messsignalen wenigstens eines Sensors erfolgt, wobei der Sensor derart ausgebildet ist und/oder an der Düsenanordnung angeordnet ist, dass Rückschlüsse auf das Dickenprofil, insbesondere den Randbereich, der Schmelze gezogen werden können. Der wenigstens eine Sensor ist vorzugsweise datenkommunizierend zur Übertragung von Messsignalen mit der Regelung verbunden. Beispielsweise kann der Sensor als Temperatursensor, Infrarot- oder Ultraschallsensor oder als optischer Sensor ausgebildet sein. Beispielhaft kann der Sensor als Kamera zur optischen Bilderfassung der Schmelze, insbesondere des Randbereichs, ausgebildet sein. Der Sensor kann vorzugsweise an einer Gießwalze angeordnet sein, um die Temperatur der aus dem Düsenaustrittspalt austretenden und an der Gießwalze geförderten Schmelze zu messen. Weiterhin kann der Sensor das Fließverhalten der Schmelze, insbesondere am Rand, messen. Insbesondere können mehrere Sensoren zur Präzision der Messung des gesamten Dickenprofils und insbesondere des Randbereichs vorgesehen sein und/oder unterschiedlich ausgebildete Sensoren kombiniert werden. Durch einen Vergleich des gemessenen Dickenprofils mit einem Sollwert kann ein Grundstellwert für die einzelnen Stellelemente von der Regelung generiert werden, sodass eine Abweichung vom Sollwert maximal 30%, insbesondere maximal 10%, vorzugsweise im Bereich von 2% bis 5% beträgt. Die Regelung weist ferner eine Datenverarbeitungseinheit auf, welche derart konfiguriert ist, dass die Messsignale des Sensors verarbeitet werden und basierend darauf ein Stellsignal für die Stellelemente bzw. die zugeordneten Thermoelemente zur Spaltverstellung des Düsenaustrittsspaltes generiert wird. Mit anderen Worten resultiert aus der Verarbeitung der Messsignale des Sensors die Ansteuerung oder Regelung einzelner, mehrerer oder aller Stellelemente der Düsenanordnung. Folglich wird eine für die Prozessstabilität und Produktqualität optimierte Schmelzestromverteilung und daraus resultierende Ausprägung des Randes von Schmelzefahne und/oder Folie erzielt.

In einer bevorzugten Ausführungsform kann vorgesehen sein, dass die Regelung der Stellelemente zur Einstellung der Düsenaustrittsbreite basierend auf abgespeicherten und/oder historischen Profilen erfolgt. Dies hat den Vorteil, dass bei einer erneuten Folienproduktion eine gezielte Inbetriebnahme und Produktion mit vorgespeicherten Einstellungen ermöglicht wird, wodurch die Reproduzierbarkeit der Einstellung des Düsenaustrittsspaltes weiter erhöht wird. Es lassen sich weiterhin vorteilhafterweise quantitative und/oder qualitative Lernschritte aus der Historie für Einstellung der Düsenaustrittsbreite ableiten.

Vorteilhafterweise ist es denkbar, dass die Verschiebung des Klemmschwertes auf ein maximales Verstellmoment begrenzt wird. Dies ermöglicht beispielhaft einen Schutz vor einer Beschädigung und/oder falschen Einstellung des Klemmschwertes. Die Begrenzung der Verschiebung des Klemmschwertes kann dabei in Abhängigkeit vom Material, insbesondere Viskosität und/oder Viskoelastizität, und/oder Qualitätskriterien und/oder der Fördergeschwindigkeit für die Düsenanordnung gewählt werden. Somit kann eine optimale Einstellung für den Produktionsprozess erfolgen.

Alternativ oder zusätzlich ist es denkbar, dass die Verschiebung des Klemmschwertes motorisch erfolgt. Es ist demnach kein manuelles Eingreifen des Bedieners erforderlich. Weiterhin dient die motorische Verschiebung des Klemmschwertes insbesondere der Vollautomatisierung der Düsenanordnung.

Vorzugsweise kann vorgesehen sein, dass bei einer Inbetriebnahme der Düsenanordnung zur Förderung der Schmelze einmalig die Stellelemente für eine nachfolgende Regelung der Spaltgröße als Ausgangseinstellung spielfrei eingestellt werden. Dies hat den Vorteil, dass mittels der spielfreien Einstellung der Stellelemente eine exakte Justierung des Düsenaustrittsspaltes ermöglicht wird. Bestünde ein zu großes Spiel der Stellelemente, kann die Erwärmung oder Abkühlung der Thermoelemente teilweise nicht zu einer Verformung der Düsenlippe führen, sondern die Längenänderung der Thermoelemente verliert sich teilweise wirkungslos im Spiel der Düsenanordnung. Weiterhin kann durch die spielfreie Einstellung der Stellelemente bei Inbetriebnahme der Düsenanordnung ein reproduzierbarer Startpunkt der Düsenregelung ermöglicht werden. Dies erhöht generell die Prozessstabilität, etwa zur vorteilhaften Steigerung der Liniengeschwindigkeit bei der Förderung der Schmelze durch die Düsenanordnung, oder zur signifikanten Steigerung der Wirtschaftlichkeit einer Flachfolienanlage. Durch die reproduzierbare spielfreie Einstellung lässt sich ebenso eine gesteigerte Qualitätskonsistenz bei verschiedenen Produkten realisieren, wodurch sowohl für das Neumaschinen- als auch für das Nachrüstgeschäft verbesserte Ergebnisse erzielt werden können. Insbesondere kann die spielfreie Einstellung bei der Inbetriebnahme der Düsenanordnung automatisch erfolgen, wodurch jeglicher manuelle Eingriff eines Bedieners vermieden werden kann. Somit kann eine hohe Reproduzierbarkeit bei der Grundeinstellung der Düsenanordnung und/oder während Produktion sichergestellt sein. Dies vereinfacht ebenso generell die Maschineneinrichtung und verkürzt signifikant die Einrichtungsdauer der Düsenanordnung vor der Produktion. Ebenso kann die Notwendigkeit von weiteren manuellen Einstellungen des Bedieners während der Produktion zur Regelung des Dickenprofils reduziert werden.

Vorzugsweise kann vorgesehen sein, dass zumindest zwei Stellelemente simultan verstellt werden. Dies hat den Vorteil, dass durch die simultane, insbesondere automatische, Verstellung von mindestens zwei Stellelementen auf eine zweitaufwendige manuelle Verstellung einzelner Stellelemente nacheinander verzichtet werden kann, indem eine Vielzahl an Iterationen des Bedieners eingespart wird. Somit kann der gesamte Produktionsprozess signifikant beschleunigt werden. Ebenso kann durch die simultane Verstellung von zwei Stellelementen, insbesondere von zwei benachbarten Stellelementen, eine Querbeeinflussung der Stellelemente reduziert werden.

Es ist ferner bevorzugt denkbar, dass eine Verstellung der Stellelemente automatisch basierend auf Messsignalen wenigstens eines Sensors erfolgt, wobei der Sensor derart ausgebildet ist und/oder an der Düsenanordnung angeordnet ist, dass Rückschlüsse auf das Dickenprofil der Schmelze gezogen werden können und der rechtsseitige und linksseitige Randbereich der Schmelze mittels des Sensors überwacht und derart gesteuert oder geregelt wird, dass der jeweilige Randbereich durch Verstellung der Stellelemente in Abhängigkeit vom Material, insbesondere Viskosität und/oder Viskoelastizität, und/oder Qualitätskriterien und/oder einer Fördergeschwindigkeit eingestellt wird. Dies hat den Vorteil, dass explizit der außerhalb des Nettobereiches befindliche Randbereich der Schmelze bzw. Folie betrachtet und bewertet wird. Durch die Überwachung des Randbereichs der Schmelze kann das gesamte Dickenprofil optimal eingestellt werden. Es lässt sich daher vorteilhaft die gesamte Breite des Düsenaustrittspaltes ausnutzen. Der Randbereich kann im Hinblick auf Qualitäts- und/oder Stabilitätskriterien, insbesondere in Abhängigkeit von dem zu produzierenden Produkt und/oder dem Produktionsprozess bewertet werden. Weiterhin ist es vorteilhaft, dass durch eine Überwachung des Randbereichs und zugehörige Verstellung der Stellelemente, der Randbereich derart eingestellt werden kann, dass sich ein Randbeschnitt verringern lässt. Das Material der Schmelze kann daher optimal verwertet werden. Weiterhin kann die Gestaltung der Schmelzestromverteilung am Düsenaustrittsspalt, insbesondere im Randbereich (und infolgedessen der sich dort ergebenden Stabilität) beispielhaft in Abhängigkeit von einem Betriebspunkt (z.B. einem Ausstoß oder einer Temperatur der Schmelze) und einer Rezeptur (z.B. Viskosität oder Viskoelastizität) erfolgen. Beispielsweise kann bei einem hohen Ausstoß und/oder bei einer hohen Schmelzeviskosität eine verstärkte Aufbiegung des Düsenaustrittsspaltes in einem mittleren Bereich erfolgen. Dies kann wiederum einen reduzierten Schmelzefluss in den Randbereichen zur Folge haben. Die Düsenregelung kann dies vorteilhafterweise kompensieren und entsprechende Einstellungen von Stellelementen vornehmen, so dass der Folienrand den definierten Stabilitätskriterien genügt. Weiterhin kann es bei einer sehr dünnen Folie von Vorteil sein, einen stabilen, dicker ausgeprägten Randbereich zu erstellen, um auch bei hohen Liniengeschwindigkeiten eine Prozessstabilität sicherzustellen. Bei einer dicken Folie kann dagegen vorteilhafterweise der Folienrand bedingt durch seine langsamere Abkühlung entsprechend dünner eingestellt werden. Mittels der Düsenregelung und Einstellung der Randbereiche ist demnach die Gestaltung der Ränder der Folie bekannt, reproduzierbar und insbesondere symmetrisch. Entsprechend ermöglicht die Regelung eine hohe Prozessstabilität und Produktqualität.

Vorzugsweise wird mittels der spielfreien Einstellung der Stellelemente ein normierter Düsenaustrittsspalt der Düsenanordnung eingestellt. Dabei können die Stellelemente symmetrisch verstellt werden. Durch den normierten Düsenaustrittsspalt ist eine hohe Reproduzierbarkeit gegeben, wodurch die kontinuierliche Produktqualität bei jeder weiteren Inbetriebnahme ermöglicht wird. Die Einstellung des normierten Düsenaustrittsspaltes kann beispielhaft abhängig von der Schmelze bzw. dem Material des zu produzierenden Produktes erfolgen. Weiterhin ermöglicht die normierte Einstellung die verkürzte Einrichtungsdauer der Düsenanordnung für die Produktion.

In einer bevorzugten Ausführungsform kann vorgesehen sein, dass der Grad der Spielfreiheit der Stellelemente je nach Art der Schmelze und/oder abhängig von der Größe eines Grundspaltes der Düsenanordnung eingestellt wird. Dabei kann insbesondere das Material der Schmelze, die Betriebstemperatur bzw. Schmelzetemperatur oder die Rezeptur der Schmelze, insbesondere deren Viskosität und/oder Viskoelastizität miteinbezogen werden. Der Grad der Spielfreiheit kann weiterhin vorzugsweise im Hinblick auf Qualitäts- und/oder Stabilitätskriterien der Schmelze und/oder des Produktionsprozesses, wie beispielsweise der Liniengeschwindigkeit und/oder der Länge der Schmelzefahne eingestellt werden.

Im Rahmen der Erfindung ist ferner denkbar, dass die spielfreie Einstellung der Stellelemente mittels einer normierten Einstellung des Drehmomentes des Stellelements erfolgt, wodurch die Stellelemente einen gleichen oder im Wesentlichen gleichen Anpressdruck an die erste Düsenlippe aufweisen. Insbesondere kann die normierte Einstellung des Drehmomentes der Stellelemente mit 2 Nm erfolgen. Dies hat den Vorteil, dass für die Regelung keine, an das herzustellende Produkt angepasste, manuelle Einstellung eines mechanischen Düsenaustrittsspaltes erforderlich ist. Die Stellelemente der Düsenanordnung werden lediglich bei Inbetriebnahme oder Re-Inbetriebnahme der Düsenanordnung einmalig so eingestellt, dass alle Stellelemente einen im Wesentlichen gleichen geringen Druck auf die Düsenlippe bewirken. Anders gesagt bewirken die Stellelemente demnach eine gleiche geringfügige Deformation der Düsenlippe bzw. eine geringfügige Vergrößerung bzw. Verkleinerung des Düsenaustrittsspaltes.

In einer bevorzugten Ausführungsform ist vorgesehen, dass die Stellelemente als Ausgangseinstellung auf einen maximalen Öffnungshub der Düsenanordnung eingestellt werden. Dies hat den Vorteil, dass auf ein spezifisches Zentrieren des Düsenaustrittspaltes verzichtet werden kann, wenn der maximale Öffnungshub der Düsenanordnung als Ausgangspunkt für die Regelung verwendet wird. Damit wird eine zeitliche Einsparung in der Produktion ermöglicht. Darüber hinaus ist es nicht erforderlich, durch eine vom Bediener vorgenommene Einstellung einzelner Stellelemente eine für die Inbetriebnahme der Düsenregelung benötigte gleichmäßige Folien-Dickenverteilung auf eine 2-Sigma Toleranz von beispielsweise 10% vorzunehmen. Die erfindungsgemäße Düsenregelung kann auch ausgehend von einer ungeregelten Toleranz bei der Inbetriebnahme von über 20%, insbesondere über 30% oder insbesondere über 40%, während der Produktion eine geregelte Toleranz von ca. 10% erzielen. Insbesondere ist es vorteilhafterweise möglich, das Anfahren und die Produktion der Düsenanordnung reproduzierbar zu gestalten, da mithilfe der Düsenregelung zu jedem Zeitpunkt für alle Stellelemente deren erfolgte Verstellung bzw. Einstellung bekannt ist.

Vorzugsweise kann vorgesehen sein, dass die spielfreie Einstellung der Stellelemente für eine erneute Inbetriebnahme der Düsenanordnung gespeichert und/oder als selbstlernender Algorithmus integriert wird. Dies hat den Vorteil, dass bei einer erneuten Folienproduktion eine gezielte Inbetriebnahme mit vorgespeicherten Einstellungen ermöglicht wird, wodurch die Reproduzierbarkeit der Einstellung des Düsenaustrittsspaltes weiter erhöht wird. Insbesondere kann die spielfreie Einstellung als Rezepturwert eingespeichert werden und/oder in Bezug auf spezifische vordefinierte Kriterien automatisch geregelt und/oder als selbst lernender Algorithmus implementiert werden.

In einer weiteren bevorzugten Ausführungsform der Erfindung ist es denkbar, dass anschließend an die Ausgangseinstellung die Stellelemente entlang der gesamten Breite der Düsenanordnung automatisch zur Spaltverstellung, insbesondere in einem Randbereich der Düsenanordnung, geregelt werden. Nach dem einmaligen Einrichten der Düsenanordnung nach den oben beschriebenen Ausführungsformen erfolgt mittels der automatischen Düsenregelung die Einstellung des für das Produkt geeigneten Düsenaustrittsspaltes. Die Regelung erfolgt vorteilhafterweise entlang der gesamten Breite des Düsenaustrittspaltes. Da somit auch eine Einstellung der Stellelemente im rechtsseitigen und linksseitigen Randbereich des Düsenaustrittspaltes erfolgt, ist es für den Bediener nicht erforderlich, durch deren manuelle Verstellung iterativ einen stabilen Folienrand während der Produktion herbeizuführen. Die Regelung kann bei der Inbetriebnahme und in der Produktion einen gezielten Einfluss auf die Schmelzestromverteilung, insbesondere im Randbereich der Düsenanordnung, nehmen, so dass hier ohne Eingreifen des Benutzers ein stabiler Rand der Schmelze erzielt wird. Mit anderen Worten erfolgt auch außerhalb des Nettobereichs der Folie eine Regelung des Dickenprofils.

Vorzugsweise kann vorgesehen sein, dass alle Stellelemente simultan verstellt werden. Dies hat den Vorteil, dass der Produktionsprozess weiter beschleunigt werden kann. Die simultane Verstellung aller Stellelemente ermöglicht ferner eine gezielte Einflussnahme auf den Randbereich. Damit kann die gesamte Breite des Düsenaustrittspaltes, inklusive des rechtsseitigen und linksseitigen Randbereichs geregelt und optimal eingestellt werden.

In einer bevorzugten Ausführungsform kann vorgesehen sein, dass die Stellelemente über einen gleichen Hub verstellt werden, wodurch eine parallele Verstellung ermöglicht wird. Insbesondere können alle Stellelemente vorzugsweise symmetrisch verstellt werden, wodurch sich ein normierter Düsenaustrittsspalt der Düsenanordnung einstellen lässt. Durch den normierten Düsenaustrittsspalt ist eine hohe Reproduzierbarkeit gegeben, wodurch die kontinuierliche Produktqualität bei jeder weiteren Inbetriebnahme ermöglicht wird. Die Einstellung des normierten Düsenaustrittsspaltes kann beispielhaft abhängig von der Schmelze bzw. dem Material des zu produzierenden Produktes erfolgen. Die Einstellung bzw. Verstellung der Stellelemente kann beispielhaft mittels einer normierten Einstellung des Drehmomentes der Stellelemente erfolgen, wodurch die Stellelemente einen gleichen oder im Wesentlichen gleichen Anpressdruck an die erste Düsenlippe aufweisen.

Im Rahmen der Erfindung ist ferner denkbar, dass die Stellelemente je nach Art der Schmelze und/oder abhängig von der Größe eines Grundspaltes der Düsenanordnung verstellt werden. Dabei kann insbesondere das Material der Schmelze, die Betriebstemperatur bzw. Schmelzetemperatur oder die Rezeptur der Schmelze, insbesondere deren Viskosität und/oder Viskoelastizität miteinbezogen werden. Dies hat den Vorteil, dass eine Einstellung des Düsenaustrittsspaltes materialspezifisch sehr präzise bestimmt werden kann. Die Einstellung kann weiterhin vorzugsweise im Hinblick auf Qualitäts- und/oder Stabilitätskriterien der Schmelze und/oder des Prozesses, wie beispielsweise der Liniengeschwindigkeit und/oder der Länge der Schmelzefahne erfolgen.

Vorzugsweise ist vorgesehen, dass einzelne Stellelemente zeitversetzt verstellt werden. Dies hat den Vorteil, dass eine produktspezifische und charakteristische Ausbildung der Schmelzefahne erzielt werden kann.

In einer bevorzugten Ausführungsform ist vorgesehen, dass insbesondere bei Erreichen einer Regelungsgrenze, eine simultane Verstellung einzelner oder mehrerer Stellelemente erfolgt. Dabei kann die Regelungsgrenze eine maximale oder minimale Öffnung des Düsenaustrittspaltes darstellen. Es kann somit vorteilhafterweise auf ein zu starkes Öffnen oder Schließen des Düsenaustrittspaltes durch eine Verstellung der Stellelemente schnellstmöglich reagiert werden.

Vorzugsweise ist denkbar, dass mittels Elektrostatik und/oder Luft eine Randanhaftung der aus der Düsenanordnung austretenden Schmelze an einer Gießwalze erfolgt, wobei die Randanhaftung, insbesondere die Stärke der Randanhaftung und/oder die Position an der Gießwalze, abhängig vom Material und/oder Qualitätskriterien und/oder der Fördergeschwindigkeit mittels der Regelung eingestellt wird. Die Randanhaftung beschreibt eine Anheftung der aus dem Düsenaustrittsspalt austretenden Schmelze an der Gießwalze, beispielsweise über Elektrostatik ("elektrostatisches Pinning") und/oder über Luft ("Luft-Pinning"). Insbesondere durch das elektrostatische Pinning zwischen einer Randverdickung und dem Nettobereich der Folie kann eine Dünnstelle auftreten, da die Elektrostatik von beiden Seiten her Schmelzepartikel anzieht. Die Ausprägung der Dünnstelle ist beispielsweise abhängig von der Schmelzestromverteilung am Düsenaustrittsspalt, vom viskoelastischen Verhalten der Schmelze und von Prozesseinstellungen wie beispielsweise der Liniengeschwindigkeit, der Länge der Schmelzefahne, der Stärke des Pinning sowie anderen Anlegeeinrichtungen wie eine Vakuumbox oder ein Luftmesser. Ein besonderer Vorteil der Düsenregelung ist dabei die im Gegensatz zum Stand der Technik reproduzierbare Gestaltung des Folienrandes, welche eine deutlich einfachere und ebenfalls reproduzierbare Einstellung des Pinning ermöglicht. Die Düsenregelung kann dabei auch Einstellhinweise oder Vorgaben für die Positionierung und Stärke des Pinning aufweisen.

Weiter vorteilhafterweise ist vorgesehen, dass die Randanhaftung während des Betriebes der Düsenanordnung kontinuierlich überwacht und/oder erfasst wird. Dies hat den Vorteil, dass das Ergebnis der Einstellung des Pinning reproduzierbar erfasst wird und entsprechend von vorgesehenen Qualitätskriterien optimiert werden kann.

Alternativ oder zusätzlich kann vorgesehen sein, dass die Randanhaftung mittels einer mehrdimensionalen motorischen Verfahrung und/oder einem optischen System und/oder einer Temperaturerfassung der Schmelze auf der Gießwalze und/oder Sensoren zur Ermittlung des Dickenprofils der Schmelze erfasst wird. Die Erfassung der Pinning Position bzw. der Position der Randanhaftung kann dabei beispielsweise mittels 1-, 2- oder 3-dimensionaler (motorischer) Verfahrung oder aber über optische Systeme erfolgen. Die Erfassung des Pinning Resultates (z.B. der Form des Randbereiches) kann mittels Temperaturerfassung der Schmelze auf der Gießwalze und/oder mittels herkömmlicher Dickenmesssysteme erfolgen, welche die gesamte Folienbreite vermessen und möglichst präzise Informationen über die Form des Randes liefern. Die Erfassung des Pinning Resultates kann weiterhin beispielhaft mittels traversierendem Sensor, insbesondere einem Infrarotsensor oder einem FPM-Sensor, unterhalb eines Auftreffpunktes auf die Gießwalze und/oder mittels herkömmlicher Dickenmesssysteme erfolgen. Als Qualitätskriterien für die Stabilität des Randes eignen sich beispielsweise die Position der Dünnstelle, das Verhältnis von Dünn- und Dickstelle, die Gestalt und/oder Form der Dünn- und Dickstelle, der erfasste Temperaturverlauf im Randbereich sowie der erfasste Verlauf der Foliendicke im Randbereich. Die Düsenregelung kann neben den Stellwerten zur Regelung der Stellelemente auch die notwendigen Informationen zum Einstellen und/oder Ansteuern und/oder Regeln von elektrostatischem und pneumatischem Pinning generieren. Dies trägt signifikant zur bereits beschriebenen Erhöhung der Prozessstabilität bei.

Im Rahmen der Erfindung ist ferner denkbar, dass die spezifische Einstellung der Stellelemente in Abhängigkeit vom Material, insbesondere Viskosität und/oder Viskoelastizität, und/oder Qualitätskriterien und/oder der Fördergeschwindigkeit für eine erneute Inbetriebnahme der Düsenanordnung gespeichert und/oder als selbstlernender Algorithmus integriert wird. Dies hat den Vorteil, dass bei einer erneuten Folienproduktion eine gezielte Inbetriebnahme mit vorgespeicherten Einstellungen ermöglicht wird, wodurch die Reproduzierbarkeit der Einstellung des Düsenaustrittsspaltes weiter erhöht wird. Insbesondere kann die spielfreie Einstellung als Rezepturwert eingespeichert werden und/oder in Bezug auf spezifische vordefinierte Kriterien automatisch geregelt und/oder als selbst lernender Algorithmus implementiert werden.

Gemäß einem weiteren Aspekt der Erfindung ist ein Steuer- und/oder Regelsystem mit einer Kontrolleinheit zur Ausführung des Verfahrens nach einem der vorhergehenden Ausführungsformen vorgesehen. Dabei gelten Merkmale und Details, die im Zusammenhang mit dem erfindungsgemäßen Verfahren beschrieben sind, selbstverständlich auch im Zusammenhang mit dem erfindungsgemäßen Steuer- und/oder Regelsystem und jeweils umgekehrt, so dass bezüglich der Offenbarung zu den einzelnen Erfindungsaspekten stets wechselseitig Bezug genommen wird bzw. werden kann.

Die Erfindung wird nachfolgend anhand von nicht einschränkenden Ausführungsbeispielen näher erläutert, die in den Figuren dargestellt sind. Darin zeigen
- Fig. 1: eine schematische Ansicht einer erfindungsgemäßen Düsenanordnung nach einem ersten Ausführungsbeispiel;
- Fig. 2: eine schematische Ansicht einer erfindungsgemäßen Düsenanordnung nach einem weiteren Ausführungsbeispiel mit einem charakteristischen Dickenprofil;
- Fig. 3: jeweils ein schematisches Diagramm einer erfindungsgemäßen Regelung mit einer simultanen und parallelen Verstellung der Stellelemente;
- Fig. 4: jeweils ein schematisches Diagramm einer erfindungsgemäßen Regelung zur Übertragung der Einstellung der Stellelemente in einem Randbereich.

In den nachfolgenden Figuren sind aus Gründen der Übersichtlichkeit gleichartige Elemente mit gleichen Bezugszeichen gekennzeichnet.

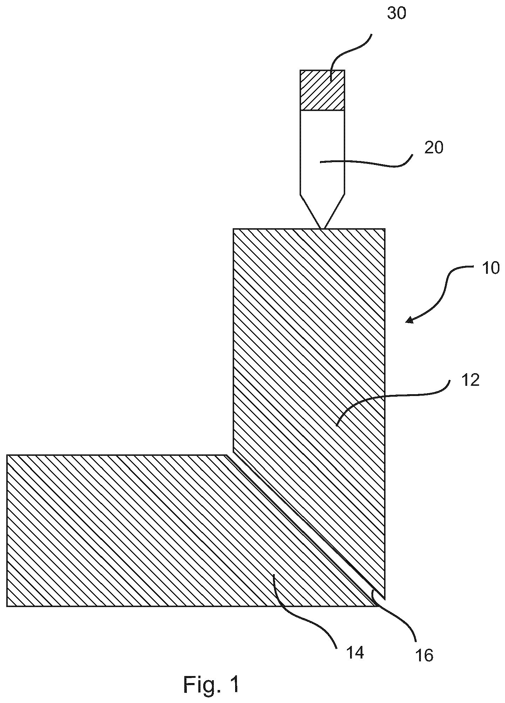

Fig. 1 zeigt eine schematische Ansicht einer erfindungsgemäßen Düsenanordnung 10 zur automatisierten Regelung der Größe eines Düsenaustrittsspaltes nach einem ersten Ausführungsbeispiel. Die Düsenanordnung 10 weist eine erste Düsenlippe 12 und eine zweite Düsenlippe 14 auf. Zwischen den Düsenlippen 12, 14 ist ein Düsenaustrittspalt 16 zur kontrollierten Einstellung eines Dickenprofils einer förderbaren Schmelze angeordnet. Dabei wird die Schmelze, beispielsweise eine Kunststoffschmelze zur Herstellung einer Flachfolie, durch den Düsenaustrittsspalt 16 gefördert. Je nach Größe bzw. Höhe des Düsenaustrittsspaltes 16 wird die Dicke der Schmelze eingestellt bzw. verändert.

Zur Einstellung der Größe bzw. Höhe des Düsenaustrittsspaltes 16 sind an der ersten Düsenlippe 12 eine Mehrzahl von Stellelementen 20, insbesondere ca. 120 Stellelemente 20, angeordnet. Symbolisch ist in Fig. 1 nur ein Stellelement 20 dargestellt.

Das Stellelement 20 ist beispielhaft als Stellbolzen ausgebildet, welcher in Richtung der ersten Düsenlippe 12 eine verjüngende Form aufweist. Die verjüngende Form läuft zu einer punktförmigen Spitze zu. Die punktförmige Spitze bildet eine minimale Kontaktfläche zwischen dem Stellelement 20 und der ersten Düsenlippe 12. Mit anderen Worten ist das Stellelement 20 über die punktförmige Spitze mit der ersten Düsenlippe 12 verbunden.

Das Stellelement 20 ist mit einem zugehörigen Thermoelement 30 gekoppelt. Das Thermoelement 30 dehnt sich bei Erwärmung aus und übt dabei über das zugehörige Stellelement 20 einen mechanischen Druck auf die erste Düsenlippe 12 aus, wodurch diese sich an der entsprechenden Stelle verformt. Insbesondere verkleinert sich dadurch der Düsenaustrittsspalt 16. Weiterhin kann sich das Thermoelement 30 bei einer Abkühlung komprimieren und bewirkt über das Stellelement 20 einen mechanischen Zug an der ersten Düsenlippe 12, wodurch sich der Düsenaustrittsspalt 16 an der entsprechenden Stelle vergrößert. Das Thermoelement 30 ist hierzu von einer Düsenregelung derart ansteuerbar, dass durch eine Ausdehnung oder Kontraktion des Thermoelements 30 die Spaltverstellung mittels einer mechanischen Krafteinwirkung von dem Stellelement 20 auf die erste Düsenlippe 12 realisierbar ist. Mit anderen Worten kann das Thermoelement 30 mittels einer beispielhaften Ausdehnung über das Stellelement 20 einen Druck auf die erste Düsenlippe 12 ausüben. Die Ausbildung des Stellelementes 20 mit der verjüngten Form führt insbesondere zu einer sehr präzisen Verstellung des Düsenaustrittsspaltes 16, da die Einwirkung auf benachbarte Stellelemente reduziert ist. Der Düsenaustrittsspalt 16 wird demnach in einem begrenzten räumlichen Bereich der ersten Düsenlippe 12 verformt. Das Thermoelement 30 kann beispielhaft mit einer Heiz- bzw. Kühlvorrichtung verbunden sein, welche von der Regelung zur Erwärmung bzw. Abkühlung des Thermoelementes 30 angesteuert wird.

Weiterhin kann eine Verstellung der Stellelemente 20 automatisch basierend auf Messsignalen eines nicht dargestellten Sensors erfolgen, wobei der Sensor derart ausgebildet ist und/oder an der Düsenanordnung 10 angeordnet ist, dass Rückschlüsse auf das Dickenprofil der Schmelze gezogen werden können und der rechtsseitige und linksseitige Randbereich der Schmelze mittels des Sensors überwacht und derart gesteuert oder geregelt wird, dass der jeweilige Randbereich durch Verstellung der Stellelemente 20 in Abhängigkeit vom Material, insbesondere Viskosität und/oder Viskoelastizität, und/oder Qualitätskriterien und/oder einer Fördergeschwindigkeit eingestellt wird. Dies hat den Vorteil, dass explizit der außerhalb des Nettobereiches befindliche Randbereich der Schmelze bzw. Folie betrachtet und bewertet wird. Durch die Überwachung des Randbereichs der Schmelze kann das gesamte Dickenprofil optimal eingestellt werden. Der Randbereich kann im Hinblick auf Qualitäts- und/oder Stabilitätskriterien, insbesondere in Abhängigkeit von dem zu produzierenden Produkt und/oder dem Produktionsprozess bewertet werden.

Bei einer Inbetriebnahme der Düsenanordnung 10 zur Förderung der Schmelze können einmalig die Stellelemente 20 für eine nachfolgende Regelung der Spaltgröße des Düsenaustrittsspaltes 16 als Ausgangseinstellung spielfrei eingestellt werden. Dies hat den Vorteil, dass eine exakte Justierung des Düsenaustrittsspaltes 16 ermöglicht wird. Bestünde ein zu großes Spiel der Stellelemente 20, kann die Erwärmung oder Abkühlung der Thermoelemente 30 teilweise nicht zu einer Verformung der Düsenlippe 12 führen. Weiterhin kann durch die spielfreie Einstellung der Stellelemente 20 bei Inbetriebnahme der Düsenanordnung 10 ein reproduzierbarer Startpunkt der Düsenregelung ermöglicht werden. Dies erhöht generell die Prozessstabilität. Insbesondere kann die spielfreie Einstellung bei der Inbetriebnahme der Düsenanordnung 10 automatisch erfolgen, wodurch jeglicher manuelle Eingriff eines Bedieners vermieden werden kann.

Beispielhaft können zumindest zwei Stellelemente 20 simultan verstellt werden. Dies hat den Vorteil, dass durch die simultane, insbesondere automatische, Verstellung von mindestens zwei Stellelementen 20 auf eine zweitaufwendige manuelle Verstellung einzelner Stellelemente nacheinander verzichtet werden kann. Ebenso kann durch die simultane Verstellung von zwei Stellelementen 20, insbesondere von zwei benachbarten Stellelementen 20, eine Querbeeinflussung der Stellelemente 20 reduziert werden.

Weiterhin kann jeweils in einem rechtsseitigen und linksseitigen Randbereich der Düsenanordnung 10 wenigstens ein nicht dargestelltes Klemmschwert angeordnet sein, wodurch die Breite des Düsenaustrittsspaltes 16 variabel einstellbar ist, wobei ein Verfahren zur Breitenverstellung des Düsenaustrittsspaltes 16 und zur Verklemmung der Stellelemente 20 automatisch durchgeführt werden kann und folgende Schritte umfasst:
- Entklemmen des Klemmschwertes innerhalb des Düsenaustrittsspaltes 16;
- Verschieben des Klemmschwertes innerhalb des Düsenaustrittspaltes 16;
- Verklemmen des Klemmschwertes innerhalb des Düsenaustrittsspaltes 16 zur Fixierung einzelner Stellelemente 20.

Dies hat den Vorteil, dass sich durch die automatische Einstellung der Klemmschwerter für eine Breitenverstellung des Düsenaustrittspaltes 16 eine signifikante Zeitersparnis im Produktionsprozess erzielen lässt, da kein manuelles Verstellen durch den Bediener erforderlich ist.

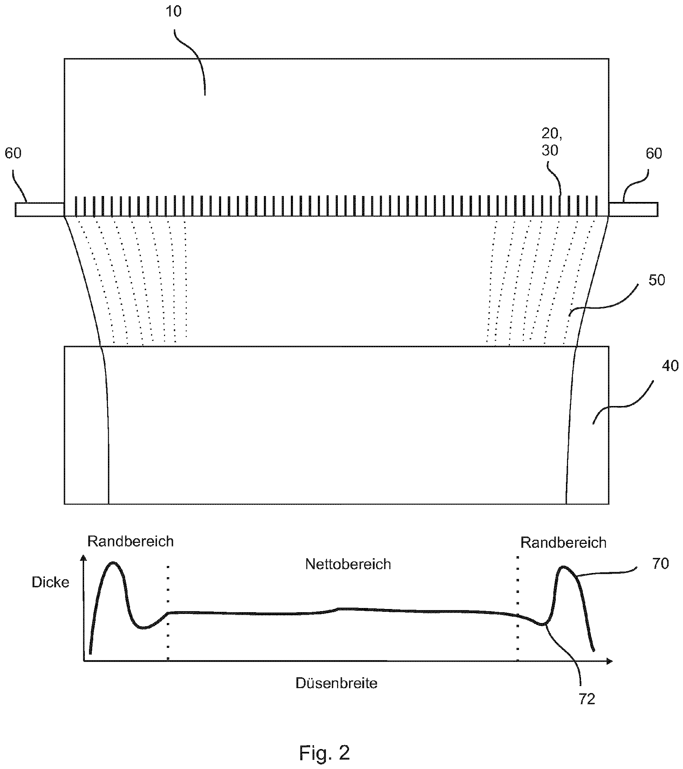

Fig. 2 zeigt eine schematische Ansicht einer erfindungsgemäßen Düsenanordnung zur automatisierten Regelung der Größe eines Düsenaustrittsspaltes nach einem weiteren Ausführungsbeispiel mit einem charakteristischen Dickenprofil. Die Düsenanordnung 10 weist eine nicht dargestellte erste Düsenlippe 12 und eine nicht dargestellte zweite Düsenlippe 14 auf. Zwischen den Düsenlippen 12, 14 ist ein Düsenaustrittspalt 16 zur kontrollierten Einstellung eines Dickenprofils einer förderbaren Schmelze 50 angeordnet. Dabei wird die Schmelze 50, beispielsweise eine Kunststoffschmelze zur Herstellung einer Flachfolie, durch den Düsenaustrittsspalt 16 gefördert. Je nach Größe bzw. Höhe des Düsenaustrittsspaltes 16 wird die Dicke der Schmelze 50 eingestellt bzw. verändert.

Zur Einstellung der Größe bzw. Höhe des Düsenaustrittsspaltes 16 sind an der ersten Düsenlippe 12 eine Mehrzahl von Stellelementen 20, insbesondere ca. 120 Stellelemente 20, angeordnet. Jedes Stellelement 20 ist mit einem zugehörigen Thermoelement 30 gekoppelt. Das Thermoelement 30 dehnt sich bei Erwärmung aus und übt dabei über das zugehörige Stellelement 20 einen mechanischen Druck auf die erste Düsenlippe 12 aus, wodurch diese sich an der entsprechenden Stelle verformt. Insbesondere verkleinert sich dadurch der Düsenaustrittsspalt 16. Weiterhin kann sich das Thermoelement 30 bei einer Abkühlung komprimieren und bewirkt über das Stellelement 20 einen mechanischen Zug an der ersten Düsenlippe 12, wodurch sich der Düsenaustrittsspalt 16 an der entsprechenden Stelle vergrößert. Das Thermoelement 30 ist hierzu von einer Düsenregelung derart ansteuerbar, dass durch eine Ausdehnung oder Kontraktion des Thermoelements 30 die Spaltverstellung mittels einer mechanischen Krafteinwirkung von dem Stellelement 20 auf die erste Düsenlippe 12 realisierbar ist.

Die durch den Düsenaustrittspalt 16 geförderte austretende Schmelze 50 wird beispielhaft mittels Elektrostatik an eine Gießwalze 40 angehaftet und kann anschließend in einer nachfolgenden Wickelvorrichtung zu einem Wickel aufgewickelt werden. Durch die Anhaftung kann die Schmelze 50 an der Gießwalze 40 fixiert werden. Dabei ist der Rand der Schmelze 50 durch den so genannten Randeinsprung ("Neck-In") charakterisiert, der auf das Ausziehen der Schmelze 50 aus der Düsenanordnung 10 sowie das viskoelastische Verhalten der Schmelze 50 zurückzuführen ist. Resultierend aus dem Neck-In tritt eine Verringerung der Folienbreite an der Gießwalze 40 im Verhältnis zur Breite des Düsenaustrittsspaltes 16, sowie eine dieser Verringerung entsprechende Verdickung 70 des Randbereichs der Folie auf. Die Verringerung der Folienbreite wird durch die gebogenen gestrichelten Linien an der Schmelze 50 dargestellt. Die Verdickung 70 ist weiterhin beispielhaft in dem charakteristischen Dickenprofil der Schmelze 50 dargestellt.

Dabei ist auf der y-Achse die Dicke der Schmelze 50 und auf der X-Achse die Düsenbreite dargestellt. Die Dicke der Schmelze 50 wird derart geregelt, dass entlang der gesamten Düsenbreite optimalerweise eine konstante Dicke erzielt werden kann. Am rechtsseitigen und linksseitigen Randbereich der Düsenanordnung 10 tritt die charakterisierende Verdickung 70 des Randes durch das Neck-In der Schmelze 50 auf. Aufgrund der elektrostatischen Randanhaftung an der Gießwalze 40 kann zwischen der Verdickung 70 und einer konstanten Dicke der Schmelze 50 eine Dünnstelle 72 auftreten, da die Elektrostatik von beiden Seiten her Schmelzepartikel anzieht. Die Ausprägung der Dünnstelle 72 ist beispielsweise abhängig von der Schmelzestromverteilung am Düsenaustrittsspalt 16, vom viskoelastischen Verhalten der Schmelze 50 und von Prozesseinstellungen wie beispielsweise der Liniengeschwindigkeit, der Länge der Schmelzefahne, oder der Stärke der Randanhaftung.

Das Dickenprofil der Schmelze 50 wird beispielhaft von einem nicht dargestellten Sensor überwacht. Dabei kann der Sensor als optischer Sensor ausgebildet und/oder an der Gießwalze 40 angeordnet sein, so dass Rückschlüsse auf das Dickenprofil der Schmelze 50 gezogen werden können. Der Sensor ist hierzu vorzugsweise datenkommunizierend zur Übertragung von Messsignalen mit der Regelung verbunden.

Durch einen Vergleich des gemessenen Dickenprofils mit einem Sollwert kann ein Grundstellwert für die einzelnen Stellelemente 20 von der Regelung generiert werden, sodass eine Abweichung vom Sollwert maximal 30%, insbesondere maximal 10%, vorzugsweise im Bereich von 2% bis 5% beträgt. Mit anderen Worten kann durch die Regelung eine im Wesentlichen konstante Dicke der Schmelze 50 eingestellt werden. Die Regelung weist hierzu eine Datenverarbeitungseinheit auf, welche derart konfiguriert ist, dass die Messsignale des Sensors verarbeitet werden und basierend darauf ein Stellsignal für die Stellelemente 20 bzw. die zugeordneten Thermoelemente 30 zur Spaltverstellung des Düsenaustrittsspaltes 16 generiert wird. Mit anderen Worten resultiert aus der Verarbeitung der Messsignale des Sensors die automatische Ansteuerung oder Regelung einzelner, mehrerer oder aller Stellelemente 20 der Düsenanordnung.

Beispielhaft können zumindest zwei Stellelemente 20 simultan verstellt werden. Dies hat den Vorteil, dass durch die simultane, insbesondere automatische, Verstellung von mindestens zwei Stellelementen 20 auf eine zweitaufwendige manuelle Verstellung einzelner Stellelemente nacheinander verzichtet werden kann. Ebenso kann durch die simultane Verstellung von zwei Stellelementen 20, insbesondere von zwei benachbarten Stellelementen 20, eine Querbeeinflussung der Stellelemente 20 reduziert werden.

Bei einer Inbetriebnahme der Düsenanordnung 10 zur Förderung der Schmelze 50 können einmalig die Stellelemente 20 für eine nachfolgende Regelung der Spaltgröße des Düsenaustrittsspaltes 16 als Ausgangseinstellung spielfrei eingestellt werden. Dies hat den Vorteil, dass eine exakte Justierung des Düsenaustrittsspaltes 16 ermöglicht wird. Insbesondere kann die spielfreie Einstellung bei der Inbetriebnahme der Düsenanordnung 10 automatisch erfolgen, wodurch jeglicher manuelle Eingriff eines Bedieners vermieden werden kann.

Weiterhin kann der rechtsseitige und linksseitige Randbereich der Schmelze 50 mittels des Sensors überwacht und derart gesteuert oder geregelt werden, dass der jeweilige Randbereich durch Verstellung der Stellelemente 20 in Abhängigkeit vom Material, insbesondere Viskosität und/oder Viskoelastizität, und/oder Qualitätskriterien und/oder einer Fördergeschwindigkeit eingestellt wird. Dies hat den Vorteil, dass explizit der außerhalb des Nettobereiches befindliche Randbereich der Schmelze 50 betrachtet und bewertet wird. Durch die Überwachung des Randbereichs der Schmelze 50 kann das gesamte Dickenprofil optimal eingestellt werden. Der Randbereich kann im Hinblick auf Qualitäts- und/oder Stabilitätskriterien, insbesondere in Abhängigkeit von dem zu produzierenden Produkt und/oder dem Produktionsprozess bewertet werden.

Weiterhin ist jeweils in einem rechtsseitigen und linksseitigen Randbereich der Düsenanordnung 10 wenigstens ein Klemmschwert 60 angeordnet, wodurch die Breite des Düsenaustrittsspaltes 16 variabel einstellbar ist, wobei ein Verfahren zur Breitenverstellung des Düsenaustrittsspaltes 16 und zur Verklemmung der Stellelemente 20 automatisch durchgeführt werden kann und folgende Schritte umfasst:
- Entklemmen des Klemmschwertes 60 innerhalb des Düsenaustrittsspaltes 16;
- Verschieben des Klemmschwertes 60 innerhalb des Düsenaustrittspaltes 16;
- Verklemmen des Klemmschwertes 60 innerhalb des Düsenaustrittsspaltes 16 zur Fixierung einzelner Stellelemente 20.

Dies hat den Vorteil, dass sich durch die automatische Einstellung der Klemmschwerter 60 für eine Breitenverstellung des Düsenaustrittspaltes 16 eine signifikante Zeitersparnis im Produktionsprozess erzielen lässt, da kein manuelles Verstellen durch den Bediener erforderlich ist. Das Entklemmen und/oder Verklemmen der Klemmschwerter 60 erfolgt dabei beispielhaft thermisch. Die Verschiebung des jeweiligen Klemmschwertes 60 kann motorisch erfolgen und auf ein maximales Verstellmoment begrenzt werden.

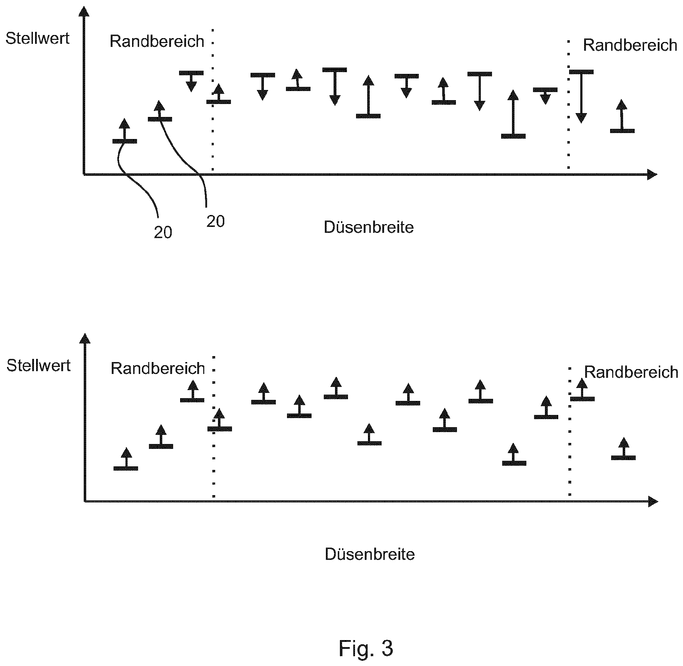

Fig. 3 zeigt jeweils ein schematisches Diagramm einer erfindungsgemäßen Regelung der Größe eines Düsenaustrittspaltes einer Düsenanordnung mit einer simultanen und parallelen Verstellung der Stellelemente. Die Beschreibung der Düsenanordnung 10 ist analog zu Fig. 2.

In beiden Diagrammen ist jeweils auf der y-Achse der Stellwert für die einzelnen Stellelemente 20 und auf der x-Achse die Düsenbreite dargestellt. Die einzelnen Stellelemente 20 sind mittels eines horizontalen Striches dargestellt. Es befinden sich demnach entlang der Düsenbreite mehrere Stellelemente 20 in einem definierten Abstand zueinander. Mittels der Pfeilrichtung wird die Verstellung der Stellelemente 20 dargestellt. Eine Verstellung nach oben impliziert eine Kontraktion des dem Stellelement 20 zugehörigen Thermoelementes 30, wodurch über das Stellelement 20 ein mechanischer Zug bewirkt wird und sich der Düsenaustrittsspalt 16 an der entsprechenden Stelle vergrößert. Eine Verstellung nach unten impliziert eine Ausdehnung des dem Stellelement 20 zugehörigen Thermoelementes 30, wodurch über das Stellelement 20 ein mechanischer Druck bewirkt wird und sich der Düsenaustrittsspalt 16 an der entsprechenden Stelle verkleinert. Die Länge der einzelnen Pfeile der Stellelemente 20 beschreibt die Größe des Stellwertes bzw. den Betrag der Stärke der Verstellung.

In dem oben dargestellten Diagramm wird von der Regelung eine simultane Verstellung aller Stellelemente 20 bewirkt. Es werden alle Stellelemente 20 entlang der gesamten Düsenbreite verstellt, insbesondere auch im rechtsseitigen und linksseitigen Randbereich. Die Größe der Verstellung erfolgt dabei basierend auf dem gemessenen Dickenprofil der Schmelze 50. Zum Ausgleich des Dickenprofils bei Abweichungen von einer konstanten Dicke, insbesondere im Nettobereich der Schmelze 50, werden die Stellelemente 20 nach oben bzw. nach unten verstellt.

In dem unten dargestellten Diagramm wird von der Regelung eine simultane und parallele Verstellung aller Stellelemente 20 bewirkt. Es werden alle Stellelemente 20 entlang der gesamten Düsenbreite symmetrisch verstellt, insbesondere auch im rechtsseitigen und linksseitigen Randbereich. Dabei werden die Stellelemente 20 über einen gleichen Hub zur Vergrößerung des Düsenaustrittsspaltes 16 verstellt. Generell kann die Verstellung der Stellelemente je nach Art der Schmelze und/oder abhängig von der Größe eines Grundspaltes der Düsenanordnung 10 erfolgen.

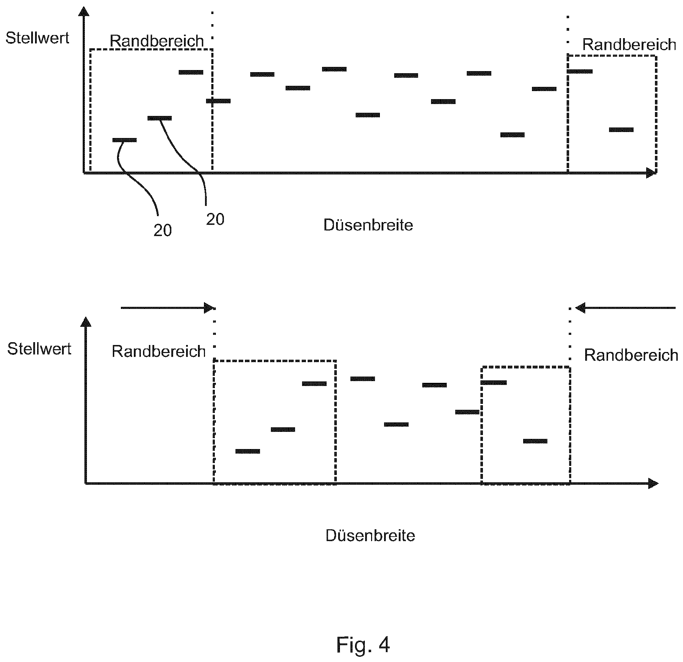

Fig. 4 zeigt jeweils ein schematisches Diagramm einer erfindungsgemäßen Regelung der Größe eines Düsenaustrittspaltes einer Düsenanordnung zur Übertragung der Einstellung der Stellelemente in einem Randbereich. Die Beschreibung der Düsenanordnung 10 ist analog zu Fig. 2.

In beiden Diagrammen ist jeweils auf der y-Achse der Stellwert für die einzelnen Stellelemente 20 und auf der x-Achse die Düsenbreite dargestellt. Die einzelnen Stellelemente 20 sind mittels eines horizontalen Striches dargestellt. Es befinden sich demnach entlang der Düsenbreite mehrere Stellelemente 20 in einem definierten Abstand zueinander.

In dem oben dargestellten Diagramm wird beispielhaft eine spezifische Einstellung der Stellelemente 20 für die gesamte Düsenbreite dargestellt. Diese spezifische Einstellung kann beispielhaft in Abhängigkeit von dem Material der Schmelze, insbesondere deren Viskosität und/oder Viskoelastizität, und/oder Qualitätskriterien und/oder der Fördergeschwindigkeit erfolgen.

In dem unten dargestellten Diagramm wird beispielhaft die spezifische Einstellung der Stellelemente 20 im jeweiligen Randbereich aus dem oberen Diagramm auf einen verkleinerten Düsenaustrittsspalt bzw. eine verkleinerte Düsenbreite übertragen. Die Verkleinerung der Düsenbreite wird mittels der Pfeile dargestellt und über die Klemmschwerter 60 realisiert. Vor dem Verschieben der Klemmschwerter 60 kann dabei eine Prüfung der Notwendigkeit einer Anpassung der spezifischen Einstellung erfolgen.

Die voranstehende Erläuterung der Ausführungsform beschreibt die vorliegende Erfindung ausschließlich im Rahmen von Beispielen. Selbstverständlich können einzelnen Merkmale der Ausführungsform, sofern technisch sinnvoll, frei miteinander kombiniert werden, ohne den Rahmen der vorliegenden Erfindung zu verlassen.

### Bezugszeichenliste

- 10: Düsenanordnung
- 12: erste Düsenlippe
- 14: zweite Düsenlippe
- 16: Düsenaustrittsspalt
- 20: Stellelement
- 30: Thermoelement
- 40: Gießwalze
- 50: Schmelze
- 60: Klemmschwert
- 70: Verdickung
- 72: Dünnstelle

## Patentansprüche

1. Verfahren zur automatisierten Regelung der Größe eines Spaltes einer Düsenanordnung, wobei die Düsenanordnung eine erste und eine zweite Düsenlippe sowie einen zwischen den Düsenlippen angeordneten Düsenaustrittsspalt zur kontrollierten Einstellung eines Dickenprofils einer förderbaren Schmelze aufweist, wobei an der ersten Düsenlippe eine Mehrzahl von Stellelementen, insbesondere eine Mehrzahl von Stellbolzen, angeordnet ist, welche mit einem zugehörigen Thermoelement gekoppelt sind, wobei die Thermoelemente von der Regelung derart ansteuerbar sind, dass durch eine Ausdehnung oder Kontraktion der Thermoelemente die Spaltverstellung mittels einer mechanischen Krafteinwirkung von dem jeweiligen Stellelement auf die erste Düsenlippe realisierbar ist, wobei jeweils in einem rechtsseitigen und linksseitigen Randbereich der Düsenanordnung wenigstens ein Klemmschwert angeordnet ist, wodurch die Breite des Düsenaustrittsspaltes variabel einstellbar ist,
wobei das Verfahren folgende Schritte umfasst, welche zur Breitenverstellung des Düsenaustrittsspaltes und zur Verklemmung der Stellelemente automatisch durchgeführt werden:
- Entklemmen des Klemmschwertes innerhalb des Düsenaustrittsspaltes;
- Verschieben des Klemmschwertes innerhalb des Düsenaustrittspaltes;
- Verklemmen des Klemmschwertes innerhalb des Düsenaustrittsspaltes zur Fixierung einzelner Stellelemente.

2. Verfahren nach Anspruch 1,
**dadurch gekennzeichnet, dass**
das Entklemmen und/oder Verklemmen des Klemmschwertes thermisch erfolgt.

3. Verfahren nach Anspruch 1 oder 2,
**dadurch gekennzeichnet, dass**
bei dem Verschieben des Klemmschwertes eine spezifische, insbesondere vorgespeicherte, Einstellung der Stellelemente, insbesondere in einem Randbereich, auf den neuen Düsenaustrittsspalt entsprechend übertragen wird,
und/oder dass bei dem Verschieben des Klemmschwertes zur Verkleinerung des Düsenaustrittspaltes eine spezifische, insbesondere vorgespeicherte, Einstellung der Stellelemente, insbesondere in einem Randbereich, auf den verkleinerten Düsenaustrittsspalt entsprechend übertragen wird,
wobei insbesondere die Einstellung der Stellelemente als Rezepturwert gespeichert wird.

4. Verfahren nach einem der vorhergehenden Ansprüche,
**dadurch gekennzeichnet, dass**
vor einem Verschieben des Klemmschwertes eine Prüfung der Notwendigkeit einer Anpassung einer spezifischen Einstellung der Stellelemente erfolgt,
und/oder dass vor einem Verschieben des Klemmschwertes eine Prüfung der Notwendigkeit einer Anpassung der spezifischen, insbesondere vorgespeicherten, Einstellung der Stellelemente, insbesondere in einem Randbereich, erfolgt.

5. Verfahren nach einem der vorhergehenden Ansprüche,
**dadurch gekennzeichnet, dass**
bei dem Verschieben des Klemmschwertes eine spezifische, insbesondere vorgespeicherte, Einstellung einer Randanhaftung der aus der Düsenanordnung austretenden Schmelze an einer Gießwalze mittels Elektrostatik und/oder Luft entsprechend übertragen wird,
und/oder dass bei dem Verschieben des Klemmschwertes zur Verkleinerung des Düsenaustrittspaltes eine spezifische, insbesondere vorgespeicherte, Einstellung einer Randanhaftung der aus der Düsenanordnung austretenden Schmelze an einer Gießwalze mittels Elektrostatik und/oder Luft auf den verkleinerten Düsenaustrittsspalt entsprechend übertragen wird,
wobei Insbesondere durch die Randanhaftung mittels der Elektrostatik zwischen einer Randverdickung und einem Nettobereich einer Folie eine Dünnstelle gebildet wird,
wobei vorzugsweise eine Ausprägung der Dünnstelle abhängig von einer Schmelzestromverteilung am Düsenaustrittsspalt, von einem viskoelastischen Verhalten der Schmelze und von Prozesseinstellungen, wie beispielsweise einer Liniengeschwindigkeit, einer Länge einer Schmelzefahne, einer Stärke der Randanhaftung mittels der Elektrostatik, sowie abhängig von Einstellungen anderer Anlegeeinrichtungen, wie beispielsweise Vakuumbox oder Luftmesser, ist.

6. Verfahren nach einem der vorhergehenden Ansprüche,
**dadurch gekennzeichnet, dass**
bei dem Verschieben und Verklemmen des Klemmschwertes zur Verkleinerung des Düsenaustrittspaltes die fixierten Stellelemente von der Regelung ausgenommen werden.

7. Verfahren nach Anspruch 6,
**dadurch gekennzeichnet, dass**
die fixierten Stellelemente von der Regelung auf einen exakten Sollwert, insbesondere einen maximalen oder minimalen Öffnungshub, eingestellt werden.

8. Verfahren nach einem der vorhergehenden Ansprüche,
**dadurch gekennzeichnet, dass**
die Regelung der Stellelemente automatisch basierend auf Messsignalen wenigstens eines Sensors erfolgt, wobei der Sensor derart ausgebildet ist und/oder an der Düsenanordnung angeordnet ist, dass Rückschlüsse auf das Dickenprofil, insbesondere den Randbereich, der Schmelze gezogen werden können.

9. Verfahren nach einem der vorhergehenden Ansprüche,
**dadurch gekennzeichnet, dass**
die Regelung der Stellelemente zur Einstellung der Düsenaustrittsbreite basierend auf abgespeicherten und/oder historischen Profilen erfolgt.

10. Verfahren nach einem der vorhergehenden Ansprüche,
**dadurch gekennzeichnet, dass**
die Verschiebung des Klemmschwertes auf ein maximales Verstellmoment begrenzt wird.

11. Verfahren nach einem der vorhergehenden Ansprüche,
**dadurch gekennzeichnet, dass** die Verschiebung des Klemmschwertes motorisch erfolgt.

12. Verfahren nach einem der vorhergehenden Ansprüche,
**dadurch gekennzeichnet, dass** bei einer Inbetriebnahme der Düsenanordnung zur Förderung der Schmelze einmalig die Stellelemente für eine nachfolgende Regelung der Spaltgröße als Ausgangseinstellung spielfrei eingestellt werden.

13. Verfahren nach einem der vorhergehenden Ansprüche,
**dadurch gekennzeichnet, dass** zumindest zwei Stellelemente simultan verstellt werden.

14. Verfahren nach einem der vorhergehenden Ansprüche,
**dadurch gekennzeichnet, dass**
eine Verstellung der Stellelemente automatisch basierend auf Messsignalen wenigstens eines Sensors erfolgt, wobei der Sensor derart ausgebildet ist und/oder an der Düsenanordnung angeordnet ist, dass Rückschlüsse auf das Dickenprofil der Schmelze gezogen werden können und der rechtsseitige und linksseitige Randbereich der Schmelze mittels des Sensors überwacht und derart gesteuert oder geregelt wird, dass der jeweilige Randbereich durch Verstellung der Stellelemente in Abhängigkeit vom Material, insbesondere Viskosität und/oder Viskoelastizität, und/oder Qualitätskriterien und/oder einer Fördergeschwindigkeit eingestellt wird.

15. Steuer- und/oder Regelsystem mit einer Kontrolleinheit zur Ausführung des Verfahrens nach einem der vorhergehenden Ansprüche.
